# EUROPÄISCHE PATENTANMELDUNG

(11) **EP 4 361 914 A1**
(43) Veröffentlichungstag der Anmeldung: **01.05.2024**
(21) Anmeldenummer: 22203247.6
(22) Anmeldetag: 24.10.2022
(51) Int. Cl.: G06Q 10/04, B22F 10/00, B22F 10/20, B22F 10/28

(54) **VERFAHREN ZUR PROZESSQUALIFIKATION EINES FERTIGUNGSPROZESSES, VERFAHREN ZUR FERTIGUNG, FERTIGUNGSMASCHINE**

(71) Anmelder: Siemens Aktiengesellschaft, 80333 München (DE)
(72) Erfinder: Dallmann, Michael, 90530 Wendelstein (DE); Reznik, Daniel, 13503 Berlin (DE)
(74) Vertreter: Siemens Patent Attorneys

(57) **Zusammenfassung**

Die Erfindung betrifft ein Verfahren zur Prozessqualifikation (PQF) eines Fertigungsprozesses (PRP) zur Fertigung eines Werkstücks (WPC) mittels einer Fertigungsmaschine (AMM) zur additiven Fertigung, wobei die Fertigungsmaschine (AMM) eine Anordnung (ISP) zur in-situ-Prüfung mindestens einer Materialbeschaffenheit (MPR) eines erzeugten Werkstücks aufweist. Damit die Effizienz der Prozessqualifikation (PQF) verbessert wird, schlägt die Erfindung die folgenden Schritte vor:
(a) Festlegen einer Sollgröße (SVL) für jede der Materialbeschaffenheiten (MPR) der mindestens einen Materialbeschaffenheit (MPR),
(b) Definition eines Ähnlichkeitskriteriums (SIC) von gemessener Materialbeschaffenheit (MPR) zu der Sollgröße (SVL),
(c) Festlegen einer Prüflingsgeometrie (TGM),
(d) Festlegen unterschiedlicher Parametersätze (PPS) von Prozessparametern zur Erzeugung der Prüflingsgeometrie (TGM) mittels der Fertigungsmaschine (AMM) zur additiven Fertigung,
(e) Erzeugen mehrerer Prüflinge (TST) oder Abschnitten (SEG) von Prüflingen (TST) mit der festlegten Prüflingsgeometrie (TGM) unter zumindest abschnittsweiser Anwendung der unterschiedlichen Parametersätze (PPS),
(f) In-Situ-Prüfen der erzeugten mehreren Prüflinge (TST) mittels der Anordnung (ISP) zur in-situ-Prüfung, mittels Messens der mindestens einen Materialbeschaffenheit (MPR),
(g) Vergleichen der gemessenen Materialbeschaffenheit (MPR) mit der Sollgröße (SVL) der Materialbeschaffenheit (MPR),
(h) Auswählen eines Parametersatzes (PPS) unter Anwendung des Ähnlichkeitskriteriums (SIC) anhand der Ähnlichkeit der gemessenen Materialbeschaffenheiten (MPR) zu den entsprechenden Sollgrößen (SVL) der Materialbeschaffenheit (MPR).

## Beschreibung

Die Erfindung betrifft ein Verfahren zur Prozessqualifikation eines Fertigungsprozesses zur Fertigung eines Werkstücks mittels einer Fertigungsmaschine zur additiven Fertigung, wobei die Fertigungsmaschine eine Anordnung zur in-situ-Prüfung mindestens einer Materialbeschaffenheit eines erzeugten Werkstücks aufweist. Daneben betrifft die Erfindung auch ein Verfahren zur Fertigung und eine Fertigungsmaschine.

Die additive Fertigung (englisch Additive Manufacturing, AM), auch als 3D-Druck bekannt sieht vor, dass Material portionsweise so lange zu einem Werkstück hinzugefügt wird, bis das Werkstück vollständig ist. Klassische Verfahren der Fertigung sehen meist eine subtraktive Fertigung vor, bei der von einem größeren Rohling ein kleineres Werkstück mittels Entfernens von Material erzeugt wird. Das additive Fertigen kann Schicht für Schicht erfolgen, insbesondere mit einer Schichtfolge entlang einer festen Raumrichtung oder das zu erzeugende Bauteil kann direkt in allen drei Raumrichtungen gefertigt werden. Beispiele für die additive Fertigung in Schichten sind Fused Deposition Modeling (FDM), Selective Laser Sintering (SLS) / Selective Laser Melting (SLM), Stereolithografie (SLA). Es gibt eine Vielzahl von Einteilungen der verschiedenen Verfahren, beispielsweise in die Kategorien: Freistrahl-Bindemittelauftrag, Materialauftrag mit gerichteter Energieeinbringung, Materialextrusion, Freistrahl-Materialauftrag, Pulverbettbasiertes Schmelzen, Schichtlaminierung, Badbasierte Photopolymerisation. Häufig liegt das Material als Pulver oder Draht vor.

Neben einer schichtweisen Auftragung ist auch eine additive Fertigung im Mehrachs-Verfahren bekannt. Zu derartigen Verfahren zählt beispielsweise das Pulverauftragsschweißen (Laser Metal Deposition, LMD) der das Roboter-gesteuerte Lichtbogenschweißen (Wire-Arc Additive Manufacturing, WAAM).

In der Regel wird das Bauteil anhand einer digitalen Vorlage, insbesondere einer 3D-CAD-Datei erzeugt. Zwischen der digitalen Vorlage und der Fertigung sind Vorarbeiten notwendig, die aus der geometrischen Information der Vorlage Anweisungen für die Fertigungsmaschine (AMM) erzeugen.

In Abhängigkeit von dem gewählten Erzeugungsverfahren sind jeweils eine Vielzahl von Verfahrensparametern zu bestimmen, die über die späteren Eigenschaften des Werkstücks, den Energieaufwand, die Fertigungszeit und weitere Faktoren entscheiden. Hierbei kann es sich um die Fertigungstemperaturen, die Schichtdicken, Filamentdurchmesser, Stromstärken, Belichtungszeiten, Pulverkörnung, Leistung des verwendeten Energiestrahls (Laserstrahl, Elektronenstrahl oder elektrischer Entladungsbogen), die Verfahrgeschwindigkeit des Strahls oder dergleichen handeln. Das damit einhergehende Optimierungsproblem ist multifaktoriell.

Der Prozess der Findung der Parameter, mit denen eine gute Materialqualität bei einer akzeptablen Material-Aufbaurate, wird häufig als "Prozessqualifikation" bezeichnet. Oft wird in einer Art Labor-Jargon für Aufgabe auch der Begriff "Materialentwicklung" verwendet, der aber missverständlich ist, weil dabei in der Regel kein neues Material, sondern nur die Prozess-Parameter ermittelt werden, mit denen ein bereits bekanntes Material, z.B. eine Legierung verarbeitet werden kann. Andererseits erfüllt die Verarbeitung auch häufig Kriterien, die als Materialeinflussfaktoren angesehen werden dürften, zum Beispiel eine Wärmebehandlung, die die Materialeigenschaften verändert.

Die Prozessqualifikation ist in der Regel die zweite Phase bei der Umsetzung eines Prozessprojektes. Ihr voran geht das Prozessdesign, im Anschluss folgt die kontinuierliche Prozessüberwachung. Prozessqualifikation wird bisweilen auch als Prozessvalidierung bezeichnet.

Ein anderes technisches Problem liegt in der Prozess-Qualitätssicherung, die gewährleisten soll, dass die in der Prozessqualifikationsphase ermittelten Materialkennwerte auch in der Fertigung Bestand haben. also das Finden von geeigneten, Material-spezifischen Prozess-Parametern zur Herstellung von Werkstücken aus einem bestimmten Material für eine bestimmte Additiven-Fertigungsmaschine (AMM) / Maschinentyp. Die in einer additiven Fertigung erzielte Materialqualität kann sich durch verschiedene Faktoren auch unbemerkt verändern oder verschlechtern. Das kann einerseits durch den technischen Zustand der Fertigungsmaschine (AMM), z.B. durch eine Defokussierung des Energiestrahls oder eine kontinuierliche Verstopfung der Schutzgas-Filter und damit die Verringerung der Schutzgas-Strömung verursacht sein. Andererseits kann eine Veränderung auch durch Verunreinigung des verwendeten Rohmaterials geschehen. Es ist von Interesse, eine Verschlechterung der Materialqualität möglichst frühzeitig zu detektieren, um Gegenmaßnahmen ergreifen zu können.

Die Prozessqualifikation, geschieht meist durch einen Versuchsplan, der die Herstellung von einfachen Probekörpern (meist Würfel oder Zylinder) durch unterschiedliche Kombinationen von Prozessparametern vorsieht. Nach der Herstellung werden diese Probekörper der Maschine entnommen und zerstörend oder zerstörungsfrei untersucht. Dabei dient in einer ersten Phase der Qualifikation eine Stellvertreter-Größe als Optimierungskriterium, in der Regel ist es die Materialdichte, mit dem Ziel, ein idealerweise porenfreies Material zu realisieren. Das Versuchsverfahren läuft in der Regel iterativ ab, so dass die Parametersätze, bei denen hohe Dichten erzielt wurden bzw. weniger Poren erzeugt worden sind, als Ausgangspunkt für eine oder mehrere Durchgänge weiterer Einengung des vieldimensionalen Parameterraums genommen werden. Erst nach mindestens zwei Durchgängen der Parameter-Findung an einfachen Dichte-Prüfkörpern werden im Rahmen der Prozessqualifikation mit den eingegrenzten Prozessparametern andere Prüfkörper gefertigt, die einen direkten Nachweis der eigentlichen mechanischen Spezifikationen des Materials erlauben, beispielsweise standardisierte Probenkörper für einen Zugversuch oder einen Biegeversuch. Zug- oder Biegetests an Proben geringerer Dichte werden in der Regel nicht unternommen. Ist die Prozessqualifikation abgeschlossen und der Prozess wird in die Fertigung überführt, werden die Prozess-Parameter "eingefroren" und zur Fertigung von Werkstücken verwendet.

Begleitend zur Fertigung finden in der Regel Maßnahmen zur Prozess-Qualitätssicherung statt. Dazu gehört das Herstellen von Begleitproben, die meistens in der Form bereits erwähnter standardisierter Probekörper für Zug- oder Biegeversuche erzeugt werden. Zusätzlich werden bei erhöhten Qualitätsanforderungen die Werkstücke aus laufender Produktion stichprobenweise einer zerstörenden oder zerstörungsfreien Materialuntersuchung unterworfen. Bei besonders hohen Anforderungen an die Qualität wird eine 100%-ige, zerstörungsfreie Untersuchung fertiger Werkstücke, etwa durch Computer-Tomografie, durchgeführt. Allen erwähnten qualitätssichernden Maßnahmen ist gemein, dass sie erst nach Abschluss des Herstellungsprozess' am fertigen Werkstück oder an den erzeugten Begleitproben durchgeführt werden.

Aus der Veröffentlichung "Relative Density Measurement of PBF-Manufactured 316L and AlSilOMg Samples via Eddy Current Testing" von Spurek MA, Luong VH, Spierings AB, Lany M, Santi G, Revaz B, Wegener K in Metals 2021; 11(9):1376, https://doi.org/10.3390/met11091376 ist es bereits bekannt bei einem Pulverbett-System und dem Verfahren des Laserstrahlschmelzens unter Verwendung einer Wirbelstrom-Prüfung die elektrische Leitfähigkeit eines unter dem Sensorkopf liegenden Ausschnitts einer gebauten Struktur zu messen. Die gemessene elektrische Leitfähigkeit korreliert demgemäß gut mit der Dichte der Struktur, so dass diese Messgröße als entsprechende Stellvertreter-Größe benutzt werden kann. Dieses Verfahren ist nur für elektrisch leitfähige Materialien, in der Regel Metall-Legierung, geeignet.

Ausgehend von den Problemen und Nachteilen des Standes der Technik hat es sich die Erfindung zur Aufgabe gemacht an, ein Verfahren eingangs definierter Art derart weiterzubilden, sodass die erläuterten Probleme und Nachteile vermieden werden.

Zur erfindungsgemäßen Lösung der Aufgabe wird ein Verfahren eingangs definierter Art mit den zusätzlichen Merkmalen des Kennzeichens des unabhängigen Anspruchs 1 vorgeschlagen. Daneben schlägt die Erfindung ein entsprechendes Computerprogrammprodukt vor. Die jeweils abhängigen Unteransprüche beinhalten vorteilhafte Weiterbildungen der Erfindung.

Im Einzelnen wird das eingangs definierte Verfahren erfindungsgemäß fortgebildet, durch die folgenden Schritte:
(a) Festlegen einer Sollgröße für jede der Materialbeschaffenheiten der mindestens einen Materialbeschaffenheit,
(b) Definition eines Ähnlichkeitskriteriums von gemessener Materialbeschaffenheit zu der Sollgröße der Materialbeschaffenheit,
(c) Festlegen einer Prüflingsgeometrie,
(d) Festlegen unterschiedlicher Parametersätze von Prozessparametern zur Erzeugung der Prüflingsgeometrie mittels der Fertigungsmaschine zur additiven Fertigung,
(e) Erzeugen mehrerer Prüflinge oder Abschnitten von Prüflingen mit der festlegten Prüflingsgeometrie unter zumindest abschnittsweiser Anwendung der unterschiedlichen Parametersätze,
(f) In-Situ-Prüfen der erzeugten mehreren Prüflinge mittels der Anordnung zur in-situ-Prüfung, mittels Messens der mindestens einen Materialbeschaffenheit,
(g) Vergleichen der gemessenen Materialbeschaffenheit mit der Sollgröße der Materialbeschaffenheit,
(h) Auswählen eines Parametersatzes unter Anwendung des Ähnlichkeitskriteriums anhand der Ähnlichkeit der gemessenen Materialbeschaffenheiten zu den entsprechenden Sollgrößen der Materialbeschaffenheit.

Im Folgenden werden spezifische Begriffsbedeutungen erläutert, die zum besseren Verständnis der Erfindung nützlich sind.

In der Terminologie der Erfindung bedeutet Fertigungsmaschine, eine Maschine zur Erzeugung eines additiv gefertigten Werkstücks. Diese Maschine kann ausgebildet sein, beispielsweise Selektives Laserschmelzen, Selektives Elektronenstrahl-Schmelzen, Laserauftragsschweißen, Wire Arc / Plasma Arc Energy Deposition oder Wire Feed Electron Deposition durchzuführen. Diese Maschine umfasst zweckmäßig auch eine Steuerungs-, Regelungs- und Planungseinheit, mittels derer der Betrieb der Maschine und die Planung des Betriebs ohne weitere Aggregate möglich ist.

Ein Beschichter im Sinne der Erfindung ist ein Bestandteil der Fertigungsmaschine, der das zu addierende Material oder die zu addierende Schicht aufträgt. Integraler Bestandteil des Beschichters kann hierbei auch die Funktion der Materialverfestigung sein.

Im Laufe der Produktion kann es zu Abweichungen zu vorab festgestellten Referenzdaten kommen. Diese können beispielsweise Verschleiß-bedingt sein oder mit einer schwankenden Qualität der verwendeten Materialien zusammenhängen. Um signifikante Abweichungen von tolerierbaren zu unterscheiden ist es sinnvoll für die Differenz zwischen den Messungen und den Referenzdaten eine Abweichungstoleranz festzulegen, so dass erst beim Überschreiten dieser Schwelle entsprechende Maßnahmen ergriffen werden. Hierbei ist es auch zweckmäßig für verschiedene Maßnahmen (Warnung, Stillstand, Korrektur, ...) unterschiedliche Abweichungstoleranz bzw. Schwellwerte festzulegen.

Bei einer eine Anordnung zur in-situ-Prüfung mindestens einer Materialbeschaffenheit handelt es sich um eine Messvorrichtung, die in der laufenden Fertigung direkt als Bestandteil der Fertigungsmaschine Messungen ermöglicht, die die Beschaffenheit des bearbeiteten Werkstücks bewertbar machen. Hierbei kann es sich beispielsweise um eine Wirbelstrommessung handeln, die einen Rückschluss auf die elektrische Leitfähigkeit des Materials ermöglicht, so dass auf die Materialdichte geschlossen werden kann.

Eine vorteilhafte Weiterbildung sieht entsprechend vor, dass eine geeignete Stellvertreter-Größe ausgewertet wird. Bevorzugt erfolgt diese Auswertung sowohl in der Prozessqualifikations-Phase als auch in der späteren Prozess-Qualitätssicherungsphase (hier kurz: Prozessüberwachung). Die Auswertung ist besonders bevorzugt umgesetzt mittels eines in der Additiven-Fertigungsmaschine eingebauten Anordnung, dass besonders bevorzugt die Auswertung zur inline- durchführt (hier kurz: in-situ).

Bei der Materialbeschaffenheit kann es sich um eine oder mehrere Größen handeln, beispielsweise um die elektrische Leitfähigkeit des Materials und, oder um die Materialdichte. Die verschiedenen Größen können auch als Stellvertretergrößen voneinander ableitbar sein.

Parametersätze der additiven Fertigung sind eine Mehrzahl von Prozessparametern des Fertigungsverfahrens, wobei die Parameter auch von der Auswahl des Verfahrens abhängig sind. Beispielsweise beim SLM kann man unter anderem die Laserparameter festlegen, die können sein: Größe des Sichtfeld des Laserscanners, Energie- /Leistungsdichte, Laserimpulslänge und -Häufigkeit, usw..

Unter einem Ähnlichkeitskriterium können verschiedene Auswertungen verstanden werden, beispielsweise eine mittlere prozentuale Abweichung der Parameter oder eine gewichtete mittlere prozentuale Abweichung der Parameter, wenn einzelne Parameter wichtiger sind als andere. Es ist auch denkbar, nur einzelne Parameter zu betrachten und andere nicht.

Eine vorteilhafte Weiterbildung der Erfindung sieht vor, dass die jeweils gemessene Materialbeschaffenheit gemeinsam mit den angewendeten Parametersatz als Referenzdaten für eine spätere Prozessüberwachung im Rahmen der Prozessqualifikation gespeichert werden.

Besonders zweckmäßig sind die Prüflinge schichtweise aufgebaut sind und in Fertigungsrichtung in Abschnitte unterteilt, Die Unterteilung ist vorteilhaft derart, dass mehrere aufeinander angeordnete Schichten jeweils einen Abschnitt bilden, wobei die Abschnitte unter Anwendung eines konstanten Parametersatzes gefertigt sind, wobei die Parametersätze angrenzender Abschnitte unterschiedlich sind.

Besonders zweckmäßig kann beim Erzeugen eines Prüflings ein Wechsel von einem Abschnitt zu einem nachfolgenden Abschnitt erfolgen, wenn mindestens eine der folgenden Bedingungen erfüllt ist:
(i) Es wurde eine bestimmte ersten Anzahl (NR1) von Schichten gefertigt und/oder
(ii) die gemessene Materialbeschaffenheit wurde innerhalb einer Konstanztoleranz festgestellt in den Messungen der zuletzt gefertigten zweiten Anzahl von Schichten, wobei die erste Anzahl größer ist als die zweite Anzahl.

Auf diese Weise kann eine große Anzahl an Parametersätzen schnell geprüft werden und besonders vorteilhaft in eine Referenzdatenbank für die spätere Prozessüberwachung aufgenommen werden.

Eine zweckmäßige Weiterbildung sieht für den Fall, dass das Ähnlichkeitskriterium in Schritt (h) mit den definierten unterschiedlichen Parametersätzen von Prozessparametern nicht erfüllt wird, vor, dass das Verfahren weitere Schritte umfassen kann. Diese wären:
- Wiederholen der Schritte (d) bis (h),
   wobei in dem wiederholten Schritt (d) die Parametersätze unter Anwendung eines Optimierungsverfahrens festgelegt werden oder
- Auswählen des Parametersatzes, der das Ähnlichkeitskriterium am besten erfüllt.

Die Parameter der Parametersätze könne hierbei manuell festgelegt werden oder beispielsweise automatisiert äquidistant über einen technisch sinnvollen Bereich festgelegt werden. Eine Iteration kann hierbei vorsehen, dass in den Bereichen, mit einer Annäherung an die Sollgrößen eine feinere Unterteilung der Parameter geprüft wird. Es kann hierbei auch ein Optimierungsverfahren beispielsweise ein Gradienten-basiertes oder ein evolutions-strategisches Optimierungsverfahren angewendet werden.

Die Erfindung betrifft auch die Fertigung eines Werkstücks. Hierbei kommt das beschriebene Verfahren zur Prozessqualifikation eines Fertigungsprozesses in einer hier offenbarten Variante zum Einsatz. Diese Fertigung des Werkstücks erfolgt mittels der Fertigungsmaschine zur additiven Fertigung unter Anwendung des ausgewählten Parametersatzes aus der Prozessqualifikation. Zusätzlich kann die Fertigung mittels Messens der mindestens einen Materialbeschaffenheit überwacht werden. Die gemessene Materialbeschaffenheit und der angewendete Parametersatz werden dann mit den Referenzdaten verglichen und eine Abweichung kann bestimmt werden. Mit der Definition einer Abweichungstoleranz der Messungen zu den Referenzdaten kann die Abweichung bewertet werden. Ist die Abweichung signifikant - wenn die Abweichung sich außerhalb der Abweichungstoleranz befindet - kann eine Ausgabe einer Abweichungswarnung mittels eines Anzeigevorrichtung und/oder ein Abbruch des Fertigungsverfahrens erfolgen.

Besonders zweckmäßig umfasst die Fertigungsmaschine zur Durchführung eines Verfahrens ein Computersystem zur Steuerung und Regelung der Fertigungsmaschine vorbereitet zur Durchführung des Verfahrens zur Prozessqualifikation und zweckmäßig auch zur Prozessüberwachung.

Hierbei ist es sinnvoll, wenn die Fertigungsmaschine die Anordnung zur in-situ-Prüfung mit mindestens einen Messsensor aufweist, der an einem Beschichter der Fertigungsmaschine angebracht ist. Dieser Messsensor kann als Wirbelstromsensor ausgebildet sein, der eine elektrische Leitfähigkeit als Materialbeschaffenheit misst. Alternativ oder zusätzlich kann der Messsensor auch ein Ultraschallsensor sein. Die damit festgestellt Materialbeschaffenheit ist eine Echoqualität die Rückschlüsse auf die Dichte zulässt und mögliche Einschlüsse oder Risse erkennt.

Eine besonders vorteilhafte Weiterbildung sieht vor, dass der Beschichter der Fertigungsmaschine entlang einer ersten Richtung beweglich ausgebildet ist und der Messsensor an dem Beschichter quer zur ersten Richtung entlang einer zweiten Richtung beweglich ausgebildet ist, derart dass die erste Richtung und die zweite Richtung miteinander eine Ebene aufspannen, die parallel zu einer Fertigungsebene der additiven Fertigung verläuft, derart, dass der Messsensor entlang der Oberfläche des addierten Materials verfahrbar ist.

Hierbei können Messköpfe des Wirbelstrom-Prüfgeräts auf dem Pulver-Beschichter montiert sein. Nach der Belichtung einer jeden Lage fährt der Beschichter über die Bauplatte, und verteilt dabei eine neue Schicht Pulver. Während der Beschichtungsfahrt überqueren die Messköpfe die mitgebauten Prüflinge bzw. Probekörper, und liefern ein unmittelbares Ergebnis über die Leitfähigkeit dieser Begleitproben-Oberfläche, dabei kann über die Variation der Wirbelstrom-Frequenz die Tiefe, die noch zum Signal beiträgt, variiert werden. Die Methode und die Anordnung in all den beschriebenen Varianten ist zur Qualitätssicherung oder auch in der ersten Phase der Prozessqualifikation zweckmäßig anwendbar.

Nach einer vorteilhaften Weiterbildung befindet sich der Messsensor auf einem motorisch angetriebenen Träger, der seinerseits auf einer am Beschichter montierten Schiene sitzt. Der Träger kann auf diese Weise den Sensorkopf entlang einer ersten Richtung verschieben, während er durch die Bewegung des Beschichters in die zweite Richtung verschoben wird. Dadurch lässt sich der Sensorkopf über jede (x,y)-Position auf der Bauplatte platzieren. Damit ist es möglich, nicht nur die Begleitproben der Fertigung, sondern auch Werkstücke oder ausgewählte Positionen mittels der Wirbelstrommessung während des Aufbaus zu inspizieren.

Auf diese Weise kann mit beispielsweise nur einem Sensor eine ganze Ebene bzw. Fläche vollständig oder stellenweise oder stichprobenartig geprüft werden.

Eine vorteilhafte Weiterbildung der Erfindung sieht vor, dass die Prozessqualifikation und Qualitätssicherung bzw. Prozessüberwachung in einem Mehrachs-Verfahren der additiven Fertigung erfolgt. Zu diesen Mehrachs-Verfahren zählen beispielsweise das Pulverauftragsschweißen (Laser Metal Deposition, LMD) oder das Roboter-gesteuerte Lichtbogenschweißen (Wire-Arc Additive Manufacturing, WAAM). Bei diesen Mehrachs-Verfahren steht das Werkstück zugänglich am Ort der Fertigung, und der Schweißkopf wird - z.B. mittels eines Roboterarms - um das aufgebaute Werkstück geführt. Wegen der im Vergleich zu SLM wesentlich höheren Schweiß-Leistungen (1-10kW) findet in der Nähe der gerade geschweißten Stelle eine wesentlich höhere Erwärmung statt. Daher ist es nach einer vorteilhaften Weiterbildung vorgesehen, dass der temperaturempfindliche Sensorkopf z.B. mittels eines 2. Roboterarms seitlich und in einem gewissen Abstand zur aktuellen Schweißposition das neu geschweißte Material abfährt, und, ähnlich wie für das Pulverbettverfahren bereits beschrieben, eine Materialbeschaffenheit, hier die Qualitäts-relevante Stellvertreter-Größe für die Materialdichte "elektrische Leitfähigkeit" während der Prozessqualifikation wie auch während der Prozessüberwachung der Fertigung aufnimmt.

Eine bevorzugte Ausführungsform der Erfindung sieht vor, dass die verschiedenen Prozess-Parameter mittels der Erzeugung von Probekörpern getestet werden. Die Probekörper können beispielsweise in Erzeugungsrichtung erstreckend zylindrisch sein, beispielsweise mit einem runden oder eckigen Querschnitt, zum Beispiel quaderförmig.

Nach einer bevorzugten Ausführungsform kann eine bestimmte Anzahl an Schichten oder Lagen vorgesehen sein - beispielsweise mindestens 10 Lagen oder zwischen 15 bis 25 Lagen, besonders bevorzugt 20 Lagen (entspricht bei gängigen Parametern etwa 1mm Bauhöhe) mit konstanten Parametern vorgesehen sein, so dass bereits eine Beurteilung des Porengehalts dieser Parametrierung möglich ist, ohne dass der Prozess abgebrochen und die Proben entnommen werden müssen.

Anschließend kann ein weiterer Durchgang mit anderer Parametrierung durchgeführt werden. Diese Parameter können besonders bevorzugt das Ergebnis eines bevorzugt iterativen Optimierungsverfahrens zur Findung eines optimalen Parametersatzes sein. Nach einer vorteilhaften Ausgestaltung kann das Optimierungsverfahren Gradienten-basiert oder evolutions-strategisch sein. Grundsätzlich kann auch ein anderes Optimierungsverfahren benutzt werden.

Beispielhaft können auf einem Probe-Zylinder der Höhe von z.B. 10mm ca. 10 verschiedene Parametersätze ausprobiert werden. Herkömmliche Vorgehensweisen ermöglichen im Gegensatz dazu nur die Evaluation eines Parametersatzes. Zusätzlich entfällt vorteilhaft die Entnahme der Probekörper aus der Maschine und die externe Durchführung von Dichteprüfungen, da die Messung ein integrierter Prozessschritt ist und die Probekörper in der Maschine verbleiben. Die Erzeugung der Probekörper wird permanent fortgesetzt, so dass sich eine Zeitersparnis ergibt.

Ein weiterer Vorteil der erfindungsgemäßen Methode der Parametersuche liegt in der Möglichkeit, die bei der Prozessqualifikation ermittelten Messungen als Referenzdaten für die spätere Qualitätssicherung zu verwenden. Die Messungen reflektieren einen Zusammenhang zwischen den Prozessparametern und den Leitfähigkeitswerte aus der Wirbelstrommessung. Auf diese Weise kann anhand der Referenzdaten die Konstanz der Arbeitsweise des Prozesses und der Anordnung bzw. der Maschine überprüft werden und es können Abweichungen erkannt und auch anhand der Referenzdaten analysiert werden. Die Abweichungen der in den Begleitproben ermittelten Leitfähigkeitswerte können direkt den Prozessqualifikationsdaten gegenübergestellt werden und während des laufenden Prozesses kann eine Entscheidung über das weitere Vorgehen getroffen werden.

Wesentliche Vorteile der Erfindung und der Weiterbildungen gegenüber dem Stand der Technik beruhen darauf, dass
- Eine Fertigungsmaschine sowohl zur Qualitätssicherung als auch zur teilautomatisierten und beschleunigten Prozessqualifikation benutzt wird.
- Die bei der Prozessqualifikation verwendeten Daten auch bei der Auswertung der Qualitätssicherung verwendet werden können.
- Selbst bei Kleinserien und dem Prototypenbau - eine Kerndomäne des Additive Manufacturing - sind mit der beschleunigten und kombinierten Prozessqualifikation und Qualitätssicherung deutliche Kosteneinsparungen zu erwarten sind.
- Die Erfindung sowohl für Pulverbett-Anlagen als auch für robotische Mehrachs-Verfahren angewandt werden kann.

Im Folgenden ist die Erfindung anhand von Ausführungsbeispielen zur Verdeutlichung näher beschrieben. Es zeigen:
- Figur 1: eine schematische, vereinfachte Darstellung der Erfindung anhand eines Flussdiagramms,
- Figuren 2: bis 4 jeweils eine schematische, vereinfachte Draufsicht auf eine erfindungsgemäße Fertigungsmaschine zur Durchführung des erfindungsgemäßen Verfahrens,
- Figur 5: eine schematische, vereinfachte seitliche Ansicht eine erfindungsgemäße Fertigungsmaschine zur Durchführung des erfindungsgemäßen Verfahrens.

Funktionsgleiche Bauteile sind teilweise mit identischen Bezugszeichen versehen. Funktionsgleiche Bauelemente werden teilweise nicht in allen Figuren ausgewiesen und auch nicht zu jeder einzelnen Abbildung separat wiederholt erläutert. Es ist grundsätzlich davon auszugehen, dass diese Bauelemente in den unterschiedlichen Darstellungen jeweils eine im Wesentlichen gleiche Funktion aufweisen.

Zur Vermeidung von Redundanz kann die Vorrichtung auch in den unter Bezugnahme auf das Verfahren beschriebenen alternativen Ausführungsformen verwendet werden, diese Ausführungsformen werden für die Vorrichtung nicht nochmals explizit beschrieben.

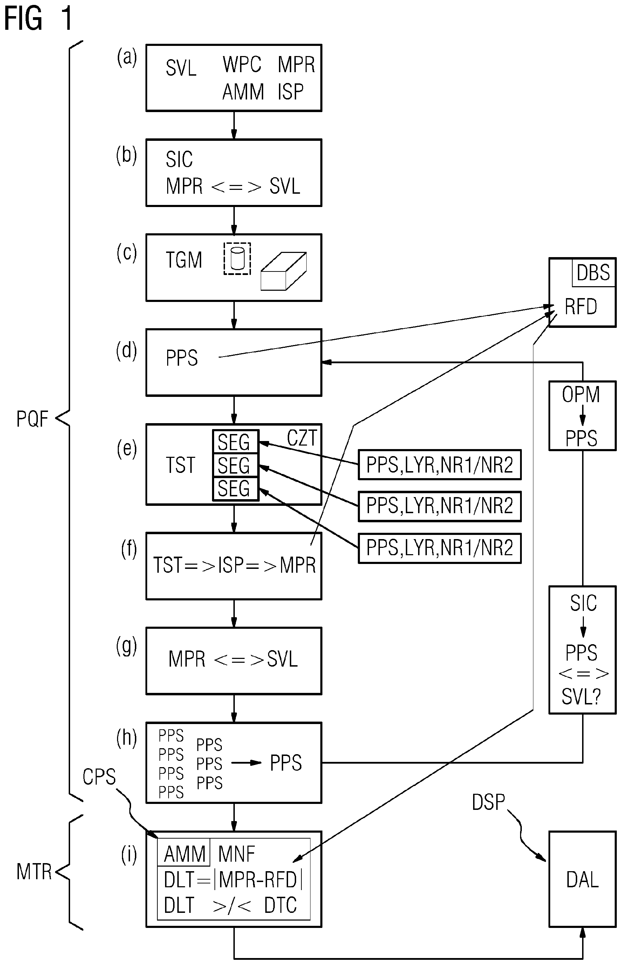

Figur 1 zeigt anhand eines Flussdiagramms das erfindungsgemäße Verfahren zur Prozessqualifikation PQF eines Fertigungsprozesses PRP zur Fertigung eines Werkstücks WPC. In einem ersten Schritt (a) werden die Fertigungsmaschine AMM zur additiven Fertigung des Werkstücks WPC bereitgestellt. Die Fertigungsmaschine AMM umfasst hierbei eine Anordnung ISP zur in-situ-Prüfung mindestens einer Materialbeschaffenheit MPR eines erzeugten Werkstücks WPC. Während Schritt (a) erfolgt eine Festlegung einer Sollgröße SVL für jede der zu prüfenden Materialbeschaffenheiten MPR. Hierbei kann es sich um direkte Messgrößen, beispielsweise elektrische Leitfähigkeit und auch um daraus abgeleitete Größen, beispielsweise Dichte, handeln.

In einem Schritt (b) erfolgt eine Definition eines Ähnlichkeitskriteriums SIC von gemessener Materialbeschaffenheit MPR zu der festgelegten Sollgröße SVL der Materialbeschaffenheit MPR. Anschließend wird eine Prüflingsgeometrie TGM in Schritt (c) festlegt. Die Reihenfolge dieser Schritte ist weitestgehend frei wählbar. Weiterhin sieht das Verfahren vor, dass in Schritt (d) unterschiedliche Parametersätze PPS von Prozessparametern zur Erzeugung der Prüflingsgeometrie TGM festgelegt werden. Diese Parameter sind bereits vorab erläutert worden; es handelt sich um ein vieldimensionales Parameterfeld. In Schritt (e) werden diese verschiedenen Parametersätze ausprobiert, in dem mehrerer Prüflinge TST oder Abschnitten SEG von Prüflingen TST mit der festlegten Prüflingsgeometrie TGM unter zumindest abschnittsweiser Anwendung der unterschiedlichen Parametersätze PPS erzeugt werden. Die Erzeugung der Prüflinge TST erfolgt schichtweise, wobei die Prüflinge TST in Fertigungsrichtung GDC in Abschnitte SEG unterteilt sind, so dass mehrere aufeinander angeordnete Schichten LYR jeweils einen Abschnitt SEG bilden. Hierbei sind die Abschnitte SEG unter Anwendung eines konstanten Parametersatzes PPS gefertigt und die Parametersätze PPS angrenzender Abschnitte SEG sind unterschiedlich.

Ein Wechsel von einem Abschnitt SEG zu einem nachfolgenden Abschnitt SEG erfolgt, wenn mindestens eine der folgenden Bedingungen erfüllt ist:
(i) Es wurde eine bestimmte ersten Anzahl (NR1) von Schichten LYR gefertigt und/oder
(ii) die gemessene Materialbeschaffenheit MPR wurde innerhalb einer Konstanztoleranz CZT festgestellt in den Messungen der zuletzt gefertigten zweiten Anzahl NR2 von Schichten LYR.

Hierbei ist die erste Anzahl NR1 größer ist als die zweite Anzahl NR2.

Das Ergebnis dieses Testdurchläufe wird in Schritt (f) durch in-situ-Prüfen - also direkt an Ort und Stelle in der Fertigungsmaschine an den erzeugten mehreren Prüflinge TST mittels der Anordnung ISP zur in-situ-Prüfung ermittelt durch einen Messvorgang der Materialbeschaffenheit MPR. Die gemessene Materialbeschaffenheit MPR und der angewendete Parametersatz PPS werden als Referenzdaten RFD für eine spätere Prozessüberwachung MTR gespeichert in einer Datenbank DBS.

Diese gemessene Materialbeschaffenheit MPR wird in Schritt (g) verglichen mit der Sollgröße SVL. Anschließend, nach Erzeugung von Prüflingsabschnitten unter Anwendung der jeweiligen Parametersätze PPS erfolgt in Schritt (h) ein Auswählen eines Parametersatzes PPS unter Anwendung des Ähnlichkeitskriteriums SIC anhand der Ähnlichkeit der gemessenen Materialbeschaffenheiten MPR zu den entsprechenden Sollgrößen SVL der Materialbeschaffenheit MPR. In dem Fall, dass das Ähnlichkeitskriterium SIC in Schritt (h) mit den definierten unterschiedlichen Parametersätzen PPS von Prozessparametern nicht erfüllt wird, ist vorgesehen, dass die Schritte (d) bis (h) mit anderen Parametersätze PPS wiederholt werden oder der Parametersatzes PPS ausgewählt wird, der das Ähnlichkeitskriterium SIC am besten erfüllt. Die anderen Parametersätze zur Wiederholung werden unter Anwendung eines Optimierungsverfahrens OPM festgelegt. Das Optimierungsverfahren OPM kann beispielsweise ein Gradienten-basiertes oder ein evolutions-strategisches Optimierungsverfahren OPM sein.

In dem dargestellten Schritt (i) erfolgt die Fertigung des Werkstücks WPC mittels der Fertigungsmaschine AMM zur additiven Fertigung unter Anwendung des ausgewählten Parametersatzes PPS. Die Fertigung MNF wird begleitet von der Prozessüberwachung MTR mittels Messens der Materialbeschaffenheit MPR und des angewendeten Parametersatzes PPS mit den Referenzdaten RFD und Bestimmen einer Abweichung DLT. Eine zuvor definierte Abweichungstoleranz DTC wird mit der Messung verglichen (DLT=|MPR-RFD|) und ggf. erfolgt eine Ausgabe einer Abweichungswarnung DAL mittels eines Anzeigevorrichtung DSP oder ein Abbruch des Fertigungsverfahrens, wenn die Abweichung DLT größer ist als die Abweichungstoleranz DTC.

Die Fertigungsmaschine AMM umfasst ein Computersystem CPS zur Steuerung und Regelung der Fertigungsmaschine AMM.

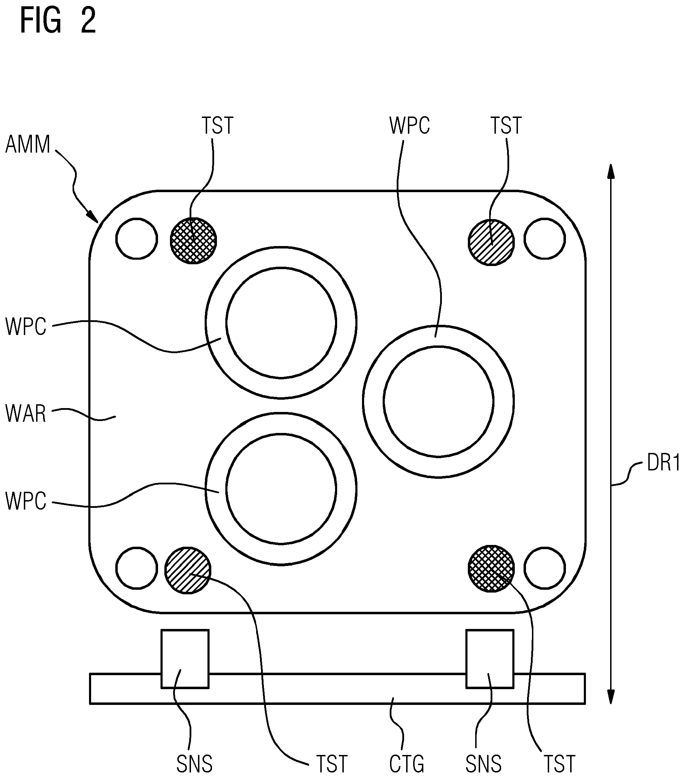

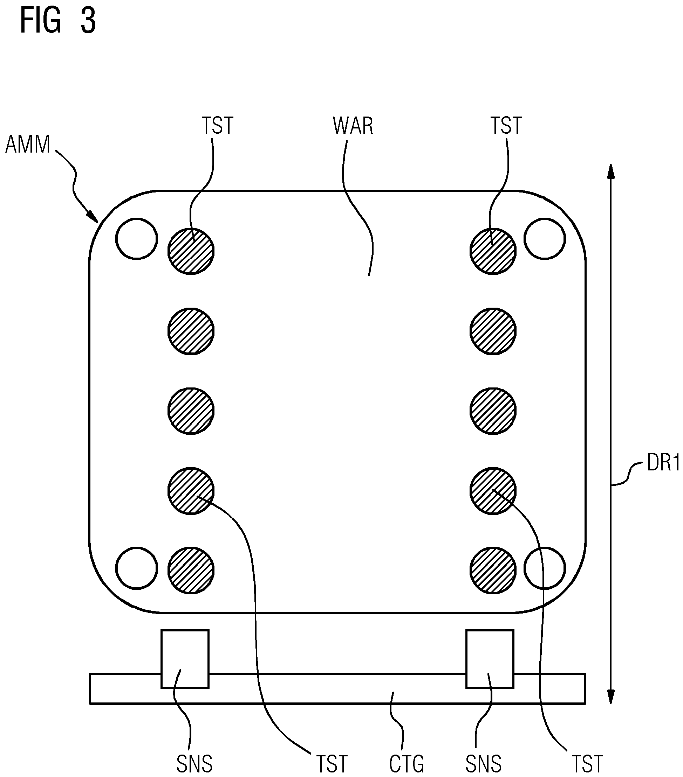

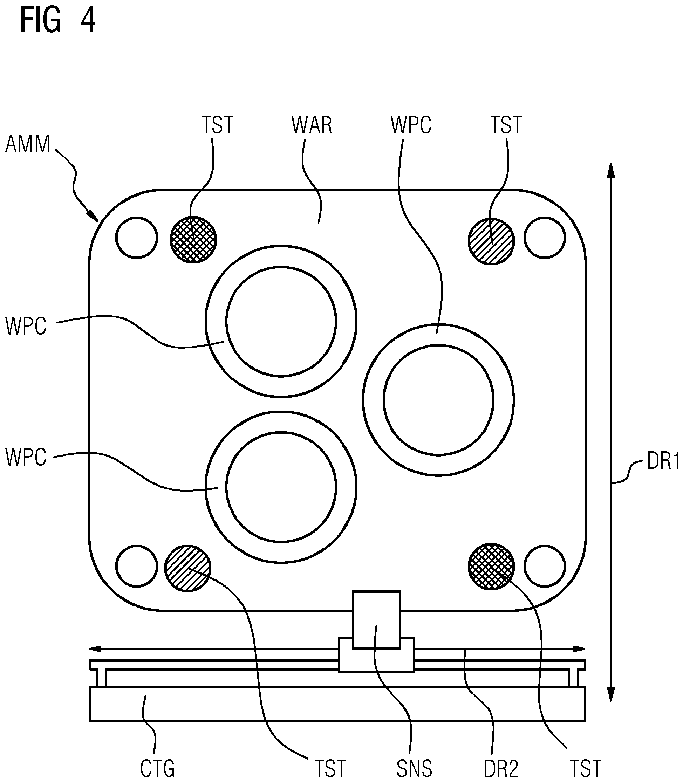

Figuren 2 bis 4 zeigen eine schematische, vereinfachte Draufsicht auf eine erfindungsgemäße Fertigungsmaschine AMM zur Durchführung des erfindungsgemäßen Verfahrens. Die Fertigungsmaschine AMM umfasst eine Anordnung ISP zur in-situ-Prüfung mit mindestens einen Messsensor SNS. In Figur 2 und 3 sind es jeweils zwei Messsensoren SNS und in Figur 4 ist es ein Messsensor SNS. Die Messsensoren SNS sind an einem Beschichter CTG der Fertigungsmaschine AMM angebracht.

Der Beschichter CTG ist entlang einer ersten Richtung DR1 verfahrbar und überstreicht hierbei einen Arbeitsbereich WAR, in dem das Werkstück WPC und Prüflinge TST angeordnet sind.

Der Messsensor SNS kann hierbei ein Wirbelstromsensor oder ein Ultraschallsensor sein. Die Anordnung ISP in den Figuren 2 und 3 weist zwei Messsensoren SNS auf, die jeweils an einem festen Ort an dem Beschichter CTG angebracht sind. Während Figur 1 zeigt, wie prozessüberwachend (MTR) drei Werkstücke WPC und begleitend zwei Prüflinge TST gefertigt werden, zeigt Figur 3 eine reine Prozessqualifikation PQF in der ausschließliche Prüflinge TST erzeugt werden und von den Messsensoren SNS bei jedem Durchgang gemessen werden.

Figur 4 zeigt eine Fertigungsmaschine AMM bei der der Beschichter CTG auch entlang einer ersten Richtung DR1 beweglich ausgebildet ist. Der einzige Messsensor SNS ist an dem Beschichter CTG quer zur ersten Richtung DR1 entlang einer zweiten Richtung DR2 beweglich ausgebildet, derart dass die erste Richtung DR1 und die zweite Richtung DR2 miteinander eine Ebene aufspannen, die parallel zu einer Fertigungsebene der additiven Fertigung verläuft, derart, dass der Messsensor SNS entlang der Oberfläche des addierten Materials verfahrbar ist.

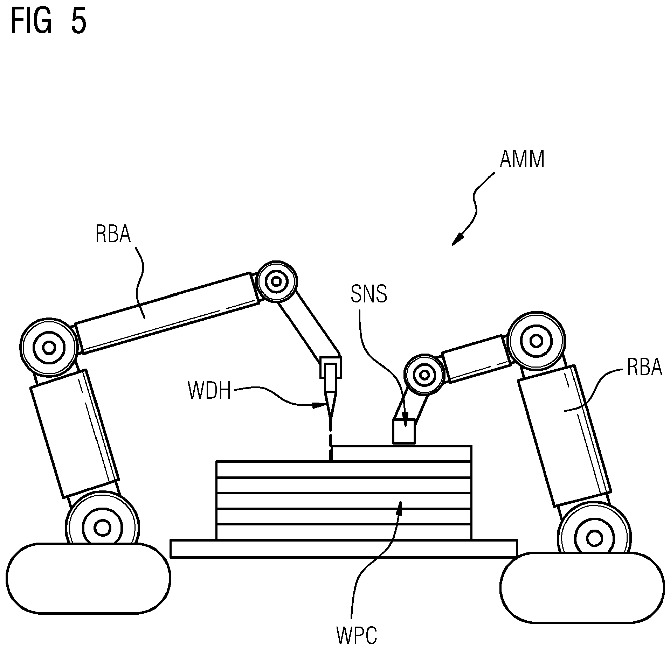

Figur 5 zeigt in einer seitlichen schematischen Ansicht eine als Mehrachsmaschine ausgebildete additive Fertigungsmaschine AMM, die die Prozessqualifikation und Qualitätssicherung bzw. Prozessüberwachung in einem Mehrachs-Verfahren durchführt. Bei diesen Mehrachs-Verfahren ist das Werkstück WPC zugänglich und ist nicht von einem Pulverbett verdeckt. Ein Schweißkopf WDH wird mittels eines ersten Roboterarms RBA um das aufgebaute Werkstück geführt. Wegen der starken Erwärmung wird der temperaturempfindliche Messsensor SNS - hier als Wirbelstromsensor ausgeführt - mittels eines 2. Roboterarms RBA in einem gewissen Abstand zur aktuellen Schweißposition geführt, um die elektrische Leitfähigkeit während der Prozessqualifikation wie auch während der Prozessüberwachung der Fertigung zu bestimmen.

### Bezugszeichenliste

- AMM: Fertigungsmaschine
- CTG: Beschichter
- DLT: Abweichung
- DR1: ersten Richtung
- DR2: zweiten Richtung
- DTC: Abweichungstoleranz
- ISP: Anordnung
- LYR: Schichten
- MNF: Fertigung
- MPR: Materialbeschaffenheit
- MTR: Überwachung
- NR1: Erste Anzahl
- NR2: zweite Anzahl
- PPS: Parametersätze
- PQF: Prozessqualifikation
- PRP: Fertigungsprozesses
- RBA: Roboterarms
- RFD: Referenzdaten
- SEG: Abschnitt
- SIC: Ähnlichkeitskriterium
- SNS: Messsensor
- SVL: Sollgröße
- TGM: Prüflingsgeometrie
- TST: Prüflinge
- WAR: Arbeitsbereich
- WDH: Schweißkopf
- WPC: Werkstück

## Patentansprüche

1. Verfahren zur Prozessqualifikation (PQF) eines Fertigungsprozesses (PRP) zur Fertigung eines Werkstücks (WPC) mittels einer Fertigungsmaschine (AMM) zur additiven Fertigung, wobei die Fertigungsmaschine (AMM) eine Anordnung (ISP) zur in-situ-Prüfung mindestens einer Materialbeschaffenheit (MPR) eines erzeugten Werkstücks (WPC) aufweist, **gekennzeichnet durch** die folgenden Schritte:
(a) Festlegen einer Sollgröße (SVL) für jede der Materialbeschaffenheiten (MPR) der mindestens einen Materialbeschaffenheit (MPR),
(b) Definition eines Ähnlichkeitskriteriums (SIC) von gemessener Materialbeschaffenheit (MPR) zu der Sollgröße (SVL) der Materialbeschaffenheit (MPR),
(c) Festlegen einer Prüflingsgeometrie (TGM),
(d) Festlegen unterschiedlicher Parametersätze (PPS) von Prozessparametern zur Erzeugung der Prüflingsgeometrie (TGM) mittels der Fertigungsmaschine (AMM) zur additiven Fertigung,
(e) Erzeugen mehrerer Prüflinge (TST) oder Abschnitten (SEG) von Prüflingen (TST) mit der festlegten Prüflingsgeometrie (TGM) unter zumindest jeweils abschnittsweiser Anwendung der unterschiedlichen Parametersätze (PPS),
(f) In-Situ-Prüfen der erzeugten mehreren Prüflinge (TST) mittels der Anordnung (ISP) zur in-situ-Prüfung, mittels Messens der mindestens einen Materialbeschaffenheit (MPR),
(g) Vergleichen der gemessenen Materialbeschaffenheit (MPR) mit der Sollgröße (SVL) der Materialbeschaffenheit (MPR),
(h) Auswählen eines Parametersatzes (PPS) unter Anwendung des Ähnlichkeitskriteriums (SIC) anhand der Ähnlichkeit der gemessenen Materialbeschaffenheiten (MPR) zu den entsprechenden Sollgrößen (SVL) der Materialbeschaffenheit (MPR).

2. Verfahren nach Anspruch 1, umfassend:
- Speichern der jeweils gemessenen mindestens einen Materialbeschaffenheit (MPR) und des angewendeten Parametersatzes (PPS) als Referenzdaten (RFD) für eine spätere Prozessüberwachung.

3. Verfahren nach Anspruch 1 oder 2,
- wobei die Prüflinge (TST) schichtweise aufgebaut sind,
- wobei die Prüflinge (TST) in Fertigungsrichtung (GDC) in Abschnitte (SEG) unterteilt sind, so dass mehrere aufeinander angeordnete Schichten (LYR) jeweils einen Abschnitt (SEG) bilden,
- wobei die Abschnitte (SEG) unter Anwendung eines konstanten Parametersatzes (PPS) gefertigt sind,
- wobei die Parametersätze (PPS) angrenzender Abschnitte (SEG) unterschiedlich sind.

4. Verfahren nach Anspruch 3,
- wobei beim Erzeugen eines Prüflings (TST) ein Wechsel von einem Abschnitt (SEG) zu einem nachfolgenden Abschnitt (SEG) erfolgt, wenn mindestens eine der folgenden Bedingungen erfüllt ist:
(i) Es wurde eine bestimmte ersten Anzahl (NR1) von Schichten (LYR) gefertigt und/oder
(ii) die gemessene Materialbeschaffenheit (MPR) wurde innerhalb einer Konstanztoleranz (CZT) festgestellt in den Messungen der zuletzt gefertigten zweiten Anzahl (NR2) von Schichten (LYR),
wobei die erste Anzahl (NR1) größer ist als die zweite Anzahl (NR2).

5. Verfahren nach mindestens einem der vorhergehenden Ansprüche, wobei in dem Fall, dass das Ähnlichkeitskriterium (SIC) in Schritt (h) mit den definierten unterschiedlichen Parametersätzen (PPS) von Prozessparametern nicht erfüllt wird, das Verfahren die weiteren Schritte umfasst:
- Wiederholen der Schritte (d) bis (h),
wobei in dem wiederholten Schritt (d) die Parametersätze (PPS) unter Anwendung eines Optimierungsverfahrens (OPM) festgelegt werden oder
- Auswählen des Parametersatzes (PPS), der das Ähnlichkeitskriterium (SIC) am besten erfüllt.

6. Verfahren nach Anspruch 3, wobei das Optimierungsverfahren (OPM) ein Gradienten-basiertes oder ein evolutions-strategisches Optimierungsverfahren (OPM) ist.

7. Verfahren zur Fertigung (MNF) eines Werkstücks umfassend das Verfahren zur Prozessqualifikation eines Fertigungsprozesses nach mindestens einem der vorhergehenden Ansprüche, umfassend:
- Fertigen des Werkstücks (WPC) mittels der Fertigungsmaschine (AMM) zur additiven Fertigung unter Anwendung des ausgewählten Parametersatzes (PPS).

8. Verfahren nach Anspruch 7 und 2, umfassend:
- Prozessüberwachen (MTR) der Fertigung (MNF) mittels Messens der mindestens einen Materialbeschaffenheit (MPR) ,
- Vergleichen der gemessenen Materialbeschaffenheit (MPR) und des angewendeten Parametersatzes (PPS) mit den Referenzdaten (RFD) und Bestimmen einer Abweichung (DLT),
- Definieren einer Abweichungstoleranz (DTC) der Messungen zu den Referenzdaten (RFD),
- Ausgabe einer Abweichungswarnung (DAL) mittels eines Anzeigevorrichtung (DSP) und/oder Abbruch des Fertigungsverfahrens, wenn die Abweichung (DLT) sich außerhalb der Abweichungstoleranz (DTC) befindet.

9. Fertigungsmaschine (AMM) zur Durchführung eines Verfahrens nach mindestens einem der Ansprüche 1 bis 8 umfassend ein Computersystem (CPS) zur Steuerung und Regelung der Fertigungsmaschine (AMM) vorbereitet zur Durchführung des Verfahrens nach mindestens einem der vorhergehenden Ansprüche 1 bis 10.

10. Fertigungsmaschine (AMM) nach Anspruch 9, wobei die Anordnung (ISP) zur in-situ-Prüfung mindestens einen Messsensor (SNS) aufweist, der an einem Beschichter der Fertigungsmaschine (AMM) angebracht ist.

11. Fertigungsmaschine (AMM) nach Anspruch 9, wobei der Messsensor (SNS) ein:
- Wirbelstromsensor und die mindestens eine Materialbeschaffenheit (MPR) eine elektrische Leitfähigkeit oder
- ein Ultraschallsensor ist und die mindestens eine Materialbeschaffenheit (MPR) eine Echoqualität ist.

12. Fertigungsmaschine (AMM) nach Anspruch 11, wobei der Beschichter (CTG) der Fertigungsmaschine (AMM) entlang einer ersten Richtung (DR1) beweglich ausgebildet ist und der Messsensor (SNS) an dem Beschichter (CTG) quer zur ersten Richtung (DR1) entlang einer zweiten Richtung (DR2) beweglich ausgebildet ist, derart dass die erste Richtung (DR1) und die zweite Richtung (DR2) miteinander eine Ebene aufspannen, die parallel zu einer Fertigungsebene der additiven Fertigung verläuft, derart, dass der Messsensor (SNS) entlang der Oberfläche des addierten Materials verfahrbar ist.
